# EUROPÄISCHE PATENTSCHRIFT

(11) **EP 0 985 563 B1**
(45) Veröffentlichungstag und Bekanntmachung des Hinweises auf die Patenterteilung: **22.09.2004**
(21) Anmeldenummer: 99122575.6
(22) Anmeldetag: 30.03.1995
(51) Int. Cl.: B60D 1/00, B60D 1/66, B60S 9/08

(54) **Hebevorrichtung**
Lifting device
Dispositif élévateur

(30) Priorität: 30.03.1994 DE 9405344 U; 08.03.1995 DE 19508089
(43) Veröffentlichungstag der Anmeldung: 15.03.2000
(62) Teilanmeldung aus: 95104771.1
(73) Patentinhaber: FISCHER, Friedrich, 21037 Hamburg (DE)
(72) Erfinder: FISCHER, Friedrich, 21037 Hamburg (DE)
(74) Vertreter: Winter, Brandl, Fürniss, Hübner, Röss, Kaiser, Polte Partnerschaft

(56) Entgegenhaltungen:
- DE-A- 4 225 767
- DE-U- 9 208 474
- FR-A- 986 200
- GB-A- 890 651
- GB-A- 2 087 810
- US-A- 3 595 527
- US-A- 3 667 730
- US-A- 4 796 864

## Beschreibung

Die Erfindung betrifft eine Hebevorrichtung, insbesondere für eine Stützund Trageinrichtung wie für die Deichsel von Fahrzeuganhängern od.dgl. nach dem Oberbegriff des Patentanspruch 1.

Im landwirtschaftlichen Bereich oder auch in anderen Bereichen, wo einachsige Fahrzeuganhänger zum Einsatz kommen, besteht das Problem, daß im abgekuppelten Zustand der Fahrzeuganhänger abkippt und das äußerste Ende der Deichsel auf dem Boden aufliegt, so daß dann zur Ankupplung von Hand dieses angehoben werden muß und der Kupplung am Fahrzeug zugeführt werden muß. Dies ist je nach Größe und Beladungszustand des Fahrzeuganhängers schwer oder gar nicht von Hand oder auch nur durch Mithilfe Dritter möglich.

Dieses Problem tritt auch bei zweiachsigen Fahrzeuganhängern auf, deren Achsen so dicht beieinander liegen, daß sie verkehrstechnisch als Einachser behandelt werden oder bei anderen Anhängern mit einer starren Deichsel. Hierbei berührt die Deichsel nicht unbedingt den Erdboden, jedoch ist sie in der Regel nicht in der richtigen Höhe, um problemios am Fahrzeug angekuppelt zu werden.

Um diese Problematik zu beheben, sind diverse Hebevorrichtungen entwickelt worden, die die Deichsel in die gewünschte Höhe bringen. So sind einfache Stützfüße bekannt, die die Deichsel in einer bestimmten Höhe halten, so daß nur noch eine relativ geringe Hubarbeit verrichtet werden muß, aber diese Stützfüße das Abkippen des Fahrzeuganhängers nicht vollständig verhindern. Diese Stand- oder Stützfüße können starr oder auch klappbar ausgeführt sein und mit einem Rad versehen sein, um das Rangieren von Hand zu erleichtern. Auch sind Standfüße bekannt, die über eine Handkurbel höhenverstellbar sind, so daß der Kraftaufwand zur Verrichtung der Hubarbeit sehr gering ist. Allerdings ist der Zeitaufwand für das Heben und Senken relativ groß, da die Übersetzungsverhältnisse aufgrund des gewünschten geringen Kraftaufwandes entsprechend gewählt werden mußten.

Die gattungsbildende US 3,595,527 offenbart eine Hebevorrichtung mit einer Schiebekulisse mit drei ineinander angeordneten Rohren und einer Handhabe zum Verschieben der Rohre. Die Handhabe ist als einfacher Klapphebel ausgeführt, der bei Bedarf aus einer Ruheposition in eine Arbeitsposition schwenkbar ist. Dabei ist er in seiner jeweiligen Lage über Rastelemente gesichert.

Auch in anderen Bereichen stellt sich das Problem, daß Stütz- und Trageinrichtungen höhenveränderbar abgestützt werden müssen. Dabei kann es sich um Wandteile, Gerüstteile, Standeinrichtungen und andere Vorrichtungen handeln, bei denen oftmals eine schnelle Höheneinstellung einfach durchgeführt werden soll, wobei dann nach erfolgter Einstellung eine Last gehalten werden soll.

Es ist daher Aufgabe der vorliegenden Erfindung, eine Hebevorrichtung zu schaffen, die es ermöglicht, eine schnelle und einfache Höhenverstellung durchzuführen, wobei in jeder eingestellten Höhenlage eine sichere Halterung und Lastaufnahme möglich sein soll.

Diese Aufgabe wird durch die in Anspruch 1 angegebenen Merkmale gelöst.

Mit einer solchen Vorrichtung ist es möglich, die gewünschte Höhenlage relativ genau zu wählen und auch die vorgesehene Feineinstellung über die erfindungsgemäße Handhabe genau einzustellen. Dabei kann die Feineinstellung ggf. auch schon unter Belastung vorgenommen werden. Durch diese Kombination mit einer rastbaren Höhengrobeinstellung und einer durch Drehung durchführbaren Feineinstellung ist eine Hebevorrichtung geschaffen worden, die für alle Einsatzzwecke ebensogut handhabbar wie auch belastbar ausgebildet ist.

Insbesondere ist somit eine Haltevorrichtung gestaltbon, mit der es möglich ist, die Deichsel eines Fahrzeuganhängers mit geringem Kraft- und Zeitaufwand in die gewünschte Position (Höhenlage) zum An- oder Abkuppeln an ein Zugfahrzeug zu bringen.

Dazu ist vorgesehen, die Deichsel von Fahrzeuganhängern mit einer Halte- bzw. Hebevorrichtung auszustatten, die einen Standfuß, ein Stützrad o.dgl. und eine Höheneinstellvorrichtung aufweist und die über eine schnelle Höhengrobeinstellung und eine Höhenfeineinstellung verfügt.

Dazu ist ein Standfuß vorgesehen, der aus einem langgestrecktem Metallprofil besteht, das einendseitig derart an der Deichsel angelenkt ist, daß die Drehachse im rechten Winkel zu der Deichsel steht und am anderen Ende des Standfußes ist eine Abrollvorrichtung angebracht, wobei die Höheneinstellvorrichtung aus ineinander verschiebbaren Rohren besteht, von denen das äußerste Rohr drehbar an der Deichsel festgelegt ist und ein erstes inneres Rohr verschiebbar aufnimmt, das an seiner Außenseite Kerben aufweist, in die mindestens eine Sperrklinke, die an dem Außenrohr gelenkig befestigt ist, einrastbar ist, wobei in dem ersten Innenrohr ein weiteres Innenrohr oder ein Innenstab angeordnet ist, der einendseitig mit dem Standfuß, benachbart zur Abrollvorrichtung, verbunden ist und über ein Gewinde o.dgl. im Innenrohr verschiebbar und festlegbar ist. Anstelle der Sperrklinken können auch verschiebliche Arretierungsbolzen oder Einrichtungen mit gleicher Wirkungsweise verwendet werden.

Durch diese Ausgestaltung ist es möglich, den Weg, der notwendig ist, um den Standfuß in Kontakt mit den Erdboden zu bringen oder umgekehrt, sehr schnell zu bewältigen, da die Höhenverstellung nicht über das Drehen einer Handhabe zur Verschiebung der beiden inneren Rohre gegeneinander erfolgen muß, sondern nur durch manuelles Lösen der Sperrklinken aus der Verriegelungsposition, so daß die inneren Rohre durch Verschieben im äußeren Rohr sehr schnell den Standfuß mit dem Erdboden in Kontakt bringen. Der Rest der Hubarbeit erfolgt herkömmlich mit der Handhabe, da hier größere Kräfte aufgebracht werden müssen.

Die erfindungsgemäße Handhabe zur herkömmlichen Höhenverstellung ist nach einer bevorzugten Ausführungsform als Handkurbel ausgestaltet, die vorteilhafterweise über eine Kurbelarretierung verfügt, so daß durch Vibrationen, die während des Fahrbetriebs auftreten, sich die Handkurbel nicht bewegt. Dazu ist vorgesehen, am Außenumfang des ersten inneren Rohres zur Handkurbel hin Zähne anzuordnen, um einen Rasterkranz auszubilden. Zur Arretierung greift ein Arretierbolzen, der Teil der Handkurbel ist, in den Rasterkranz ein. Durch manuelle Betätigung der Handkurbel, d.h. durch Herunterdrücken wird der Arretierbolzen aus der Sperrposition im Rasterkranz entfernt, so daß durch Drehen der Handkurbel die Höhenfeineinstellung erfolgen kann.

Zur Positionierung des Arretierbolzens kann die Handkurbel gemäß zwei bevorzugten Ausführungsformen ausgebildet sein.

Dazu ist nach der einen Ausführungsform vorgesehen, daß die Handkurbel über einen Drehknopf verfügt, der zur Betätigung der Handkurbel gegen die Kraft einer in seinem Inneren angeordneten Feder heruntergedrückt wird, wobei eine Wippe im Inneren der Handkurbel den Arretierbolzen aus dem Rasterkranz herauszieht.

Nach der anderen Ausführungsform ist die Handkurbel selber als Wippe ausgebildet, die gegen eine Federkraft heruntergedrückt wird, wobei der endseitig festgelegte Arretierbolzen aus dem Rasterkranz geführt wird.

Der Drehpunkt der Wippe liegt in dem Punkt, an dem die Handkurbel an der Gewindestange angelenkt ist.

Nach einer anderen Ausführungsform der Handhabe wird diese bzw. eine Handkurbel derart ausgebildet, daß zur Höhenfeineinstellung die Handkurbel nicht mehr einen vollen Kreis beschreiben muß, sondern daß Teilkreise ausreichen, was insbesondere bei beengten räumlichen Gegebenheiten von Vorteil ist. Dazu ist der Rasterkranz fest an der Gewindestange angeordnet, während die Handkurbel über einen Freilauf mit der Gewindestange als Drehpunkt verbunden ist. Befindet sich der Arretierbolzen im Eingriff des Rasterkranzes, so kann durch Drehen der Handkurbel der Rasterkranz bewegt werden und es erfolgt eine Höhenverstellung. Der Rasterkranz ist dabei über ein Gleitlager gegenüber dem ersten inneren Rohr festgelegt. Durch Drücken der Handkurbel wird die Verbindung zum Rasterkranz gelöst.

So kann durch ein "Hin- und Her-Bewegen" die Höhenverstellung erfolgen.

Nach einer weiteren Ausführungsform der Höhengrobeinstellung ist es vorgesehen, daß das äußerste Rohr der ebenfalls aus ineinander verschiebbaren Rohren bestehenden Hebevorrichtung an der Deichsel festgelegt oder angelenkt ist. In dem äußersten Rohr ist ein inneres Rohr gelagert, das aus dem äußersten Rohr auf der der Deichsel entgegengesetzten Seite herausragt und ein Stützrad o.dgl. trägt. In dem inneren Rohr befindet sich ein Gewindestab, der auf dem der Deichsel zugewandten Seite der beiden Rohre aus diesen herausragt, wobei er gegenüber dem äußersten Rohr über ein Gleitlager in seiner Position fixiert ist.

An dem herausragenden Teil des Gewindestabes ist die Handhabe befestigt.

Das innere Rohr wird gegenüber dem Gewindestab mittels eines Gewindekörpers abgestützt, der durch Durchgangsöffnungen im inneren Rohr in das Gewinde des Gewindestabes eingreift. Der Gewindekörper ist nach einer Ausführungsform mindestens zweigeteilt, vorzugsweise besteht er aus vier Segmenten. Der aus dem inneren Rohr herausragende Teil dieser Segmente ist über einen Druckring gegen Federkraft hineindrückbar, wobei sich beide Gewinde verzahnen. Ist der Druckring, der vorzugsweise durch eine Drehung betätigt wird, in der Position, in der er die Segmente nicht an die Gewindestange drückt, so kann zur schnellen Höhenverstellung das innere Rohr, das nun unabhängig vom Gewindestab bewegt werden kann, so weit herausgezogen werden, daß das Stützrad o.dgl. den Boden berührt. Anschließend werden die Segmente des Gewindekörpers wieder zum Eingriff mit dem Gewindestab gebracht, so daß nun die Höhenfeineinstellung mittels der Handhabe erfolgen kann.

Die Betätigung erfolgt vorzugsweise über eine Handhabe, die durch einen vertikalen Schlitz im äußeren Rohr direkt am Druckring angreift.

Vorteilhafterweise kann das Gewinde des Gewindestabes und/oder der Segmente des Gewindekörpers quadratisch oder sich nach innen verjüngend hinsichtlich der Flankenform der Gewindegänge ausgebildet sein. Dadurch werden die Segmente unter Last gegen die Gewindestange gedrückt, so daß eine selbsttätige Sicherung des Gewindekörpers gegen unbeabsichtigtes Freigeben der Gewindestange besteht.

Die Ausführungsform mit dem in Segmente unterteilten Gewindekörper kann auch durch eine Vorrichtung mit einer zweiteiligen Mutter, die den Gewindestab allseitig umfaßt, ersetzt werden. Die beiden Teile der Mutter sind in einem Gehäuse verschiebbar gelagert und werden mittels Federkraft gegen die Gewindestange gepreßt, so daß mit der Handhabe eine Höhenfeineinstellung vorgenommen werden kann. Zur Höhengrobeinstellung werden die Mutterteile gegen die Federkraft mittels entsprechender Handhaben von den Gewindeteilen weggezogen, so daß das Gehäuse mit der geteilten Mutter bzw. die Deichsel unabhängig von der Handhabe der Gewindestange verstellt werden kann.

Anstelle des Gewindekörpers ist es auch möglich, zwei miteinander verschraubbare Muttern zu verwenden. Eine der Muttern weist bei dieser Ausführungsform lediglich zwei Bereiche auf, die über ein Gewinde über jeweils ca. 90° verfügen. Korrespondierend ist auch der Gewindestab ausgebildet, so daß bei einer Verdrehung um 90° ein Freigang der entsprechenden Mutter gegenüber dem Gewinde erzielt wird und die Höhenverstellung erfolgen kann. Anschließend wird die Mutter wieder zum Eingriff gebracht und mit der anderen Mutter gesichert, die gerätefest gehalten werden kann.

Eine zusätzliche Sicherung beider Muttern kann mittels eines Sicherungsbolzens erfolgen.

Eine weitere Höhengrobeinstellung wird dadurch geschaffen, daß der Gewindestab halbseitig von einem Mutternkörper umfaßt wird, der durch eine Öffnung im inneren Rohr geführt ist und der gegen Federkraft vom Gewindestab getrennt werden kann, so daß eine freie Verschiebbarkeit gegeben ist. Der Gewindestab kann aber auch von einem weiteren Mutternkörper auf der freien Halbseite umfaßt werden, wobei dann über eine entsprechende Vorrichtung, z.B. ein Kreuzgelenk, beim Trennen des ersten Mutternkörpers vom Gewindestab mittels einer Handhabe der zweite halbseitige Mutternkörper ebenfalls vom Gewindestab abgezogen wird.

Ein derartiges Kreuzgelenk o.dgl. ist bei allen Ausführungsformen mit einem zwei- oder mehrteiligen Mutter- oder Gewindekörper einsetzbar.

Bei den Ausführungsformen der Vorrichtung, die ein Stützrad aufweisen, kann eine Einrichtung zur automatischen Positionierung und Fixierung des Stützrades im Fahrbetrieb vorgesehen werden, damit z.B. vorteilhafterweise das Stützrad um eine senkrechte Achse während der Fahrt rotiert. Dazu ist vorgesehen, am zweiten inneren Rohr benachbart zum Stützrad ein kleines Rad zu befestigen, dessen Drehachse im rechten Winkel zum zweiten inneren Rohr steht. Die Positionierung dieses Rades erfolgt derart, daß das Rad in die Richtung weist, in der das Stützrad fixiert werden soll.

Weiterhin ist die Unterkante des ersten inneren Rohres abgeschrägt. Wird nun das Stützrad hochgezogen, so läuft das kleine Rad auf der abgeschrägten Kante bis zum höchsten Punkt der Schräge. In diese Position wird dabei automatisch das Stützrad verdreht und fixiert.

Nachstehend wird die Erfindung anhand der einzelnen Figuren in der Zeichnung näher erläutert. Es zeigt in rein schematischer Darstellung
Fig. 1 in einer teilweise geschnittenen Seitenansicht eine Hebevorrichtung in nichtbelastetem Zustand;
Fig. 2 in einer teilweise geschnittenen Seitenansicht eine Hebevorrichtung im ausgefahrenen Zustand;
Fig. 3 in einer teilweise geschnittenen Seitenansicht eine Ausführungsmöglichkeit der Höheneinstelleinrichtung;
Fig. 4 in einer Teildarstellung eine weitere Ausführungsform der Höheneinstelleinrichtung;
Fig. 5 in einer teilweise geschnittenen Seitenansicht einer Hebevorrichtung gemäß einer weiteren Ausführungsform;
Fig. 6 in einem Längsschnitt eine Detailansicht von Fig. 4;
Fig. 7 in einem Querschnitt eine Detailansicht von Fig. 4;
Fig. 8 in einer geschnittenen Detailansicht eine andere Ausführungsform einer Vorrichtung zur Höhengrobeinstellung;
Fig. 9 und 10 in einer geschnittenen Detailansicht eine weitere Ausführungsform einer Vorrichtung zur Höhengrobeinstellung;
Fig. 11 in einer teilweise geschnittenen Detailansicht eine weitere Ausführungsform einer Vorrichtung zur Höhengrobeinstellung;
Fig. 12 in einer teilweise geschnittenen Seitenansicht eine Hebevorrichtung mit der erfindungsgemäßen Handhabe und einer Einrichtung zur automatischen Positionierung eines Stützrades;
Fig. 13 in einer teilweise geschnittenen Seitenansicht eine Ausführungsform einer weiteren erfindungsgemäßen Handhabe;
Fig. 14 in einer geschnittenen Seitenansicht eine Abwandlungsform einer erfindungsgemäße Hebevorrichtung; und
Fig. 15 in einer teilweise geschnittenen Draufsicht eine Abwandlungsform der Ausführungsform von Fig. 8.

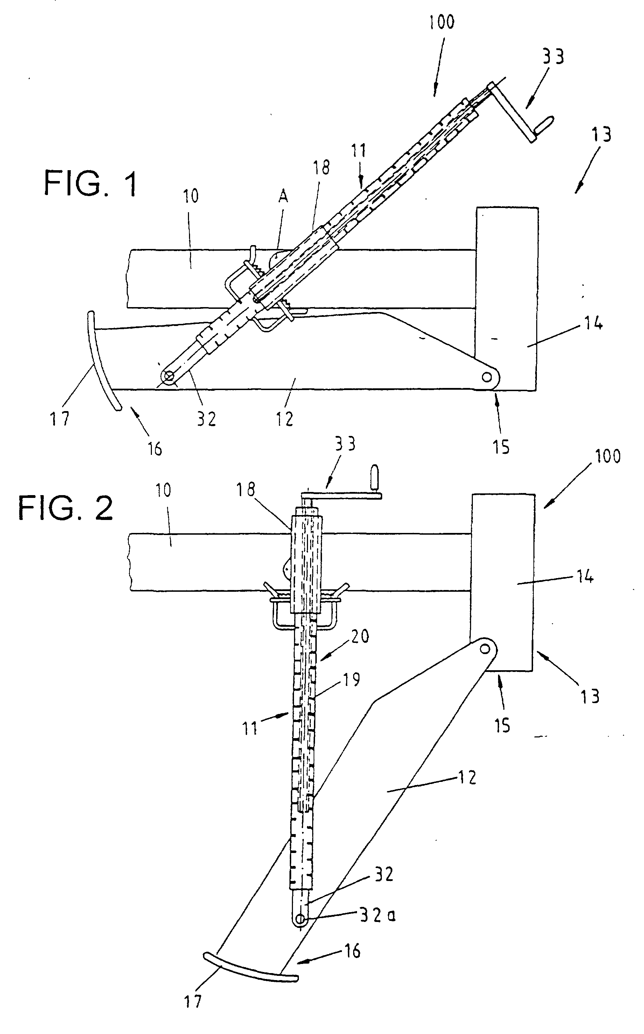

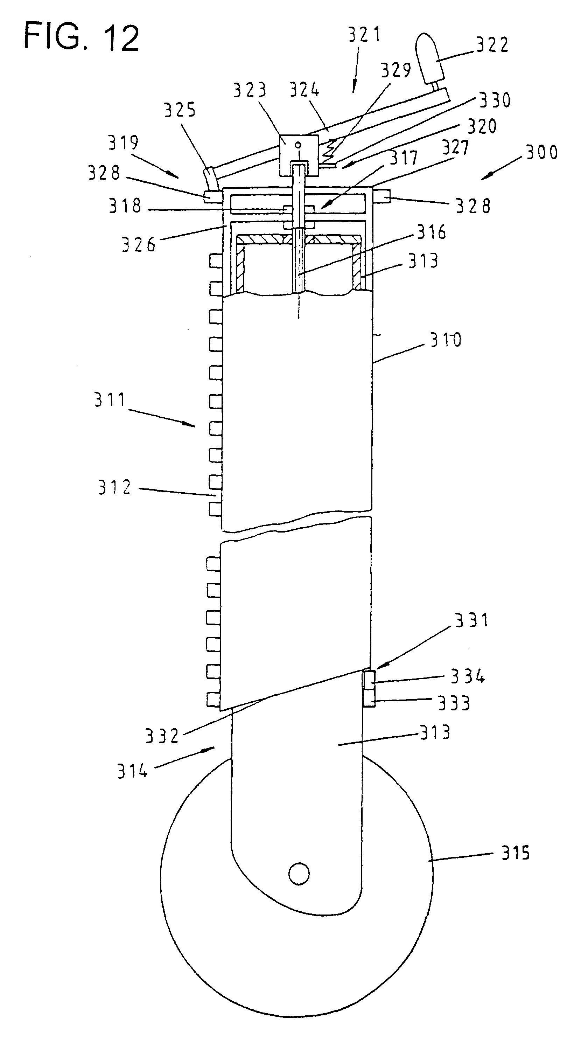

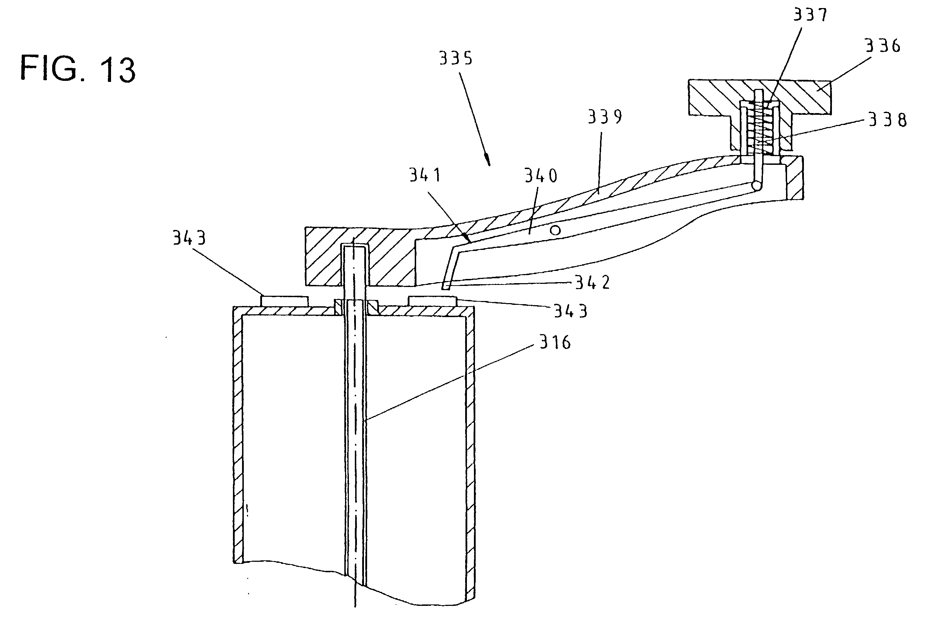

Die Figuren 1-11, 14 and 15 zeigen bevorzugte Hebevorrichtungen und Höheneinstelleinrichtungen wie zum Beispiel aus der EP 06 88687 bekannt, wohingegen die Figuren 12 and 13 erfindungsgemäße Handblaben an vorbeschreibenen Hebervorrichtungen bestellen.

Die in Fig. 1 und 2 dargestellte Hebevorrichtung 100 ist an einer Deichsel 10 eines nicht dargestellten Fahrzeuganhängers festgelegt und umfaßt eine Höheneinstelleinrichtung 11 und einen Standfuß 12. Die Deichsel 10 weist an der dem Fahrzeug zugewandten Seite 13 einen Querträger 14 auf, an dem eine nicht dargestellte Kupplung für das Fahrzeug befestigbar ist. An dem Querträger 14 ist an einem Ende 15 der Standfuß 12 angelenkt. Am entgegengesetzten Ende 16 des Standfußes 12 ist eine Abrollplatte 17 vorgesehen. Die Höheneinstelleinrichtung 11 besteht aus einem äußeren Rohr 18, das an der Deichsel 10 am Punkt A angelenkt ist. Im äußeren Rohr 18 ist ein erstes inneres Rohr 19 verschiebbar gelagert, wobei dieses vom äußeren Rohr 18 nur zu einem geringen Teil umfaßt wird. An der Außenseite 20 des ersten inneren Rohres 19 sind Kerben 21, 22 eingebracht, in die Sperrklinken 23, 24 eingreifen. Die Sperrklinken 23, 24 werden von einer Halterung 25, 26 gehalten und durch eine Feder 27, 28 derart beaufschlagt, daß der abgewinkelte Teil 29, 30 der Sperrklinken 23, 24 auf die Außenfläche 20 des ersten inneren Rohres 19 bzw. in die jeweilige Kerbe 21, 22 gedrückt werden. Die Kerben 21, 22 sind nicht auf gleicher Höhe, bezogen auf die Längsachse L des ersten inneren Rohres 19, sondern gegeneinander verschoben angeordnet, so daß immer nur eine Sperrklinke 23 in die jeweilige Kerbe 21 eingreift, während die andere Sperrklinke 24 auf der Außenseite 20 ruht. In das erste innere Rohr 19 ist ein weiteres Innenrohr (innerstes Innenrohr) 31 eingebracht, das an dem dem Standfuß 12 zugewandten Ende 32 aus dem ersten inneren Rohr 19 herausragt und am Standfuß 12 benachbart zur Abrollplatte 17 bei 32a angelenkt ist. Das erste innere Rohr 19 und das weitere Innenrohr 31 sind mittels einer Handhabe 33 gegeneinander verschiebbar. Die Handhabe 33 besteht aus einer Handkurbel 34 und einem Gewindestab 35, der in ein korrespondierendes Gewinde 36 des weiteren Innenrohres 31 eingreift, wobei es mittels eines Gleitlagers 37, das auf dem Gewindestab 35 festgelegt ist, gegenüber dem ersten inneren Rohr 19 abgestützt wird. Die Sperrklinken 23, 24 sind jeweils mit einer griffartigen Handhabe 38, 39 versehen, mit der ein Lösen der Sperrklinke 23, 24 aus dem Eingriff in die Kerbe 21, 22 durchgeführt wird. Dies ist notwendig, wenn die Ausfuhrlänge verkürzt werden soll, während das Ausfahren ohne Betätigung der Handhabe möglich ist, da aufprund der Formgebung und der Geometrie die Sperrklinken 23, 24 gegen die Federkraft ausweichen.

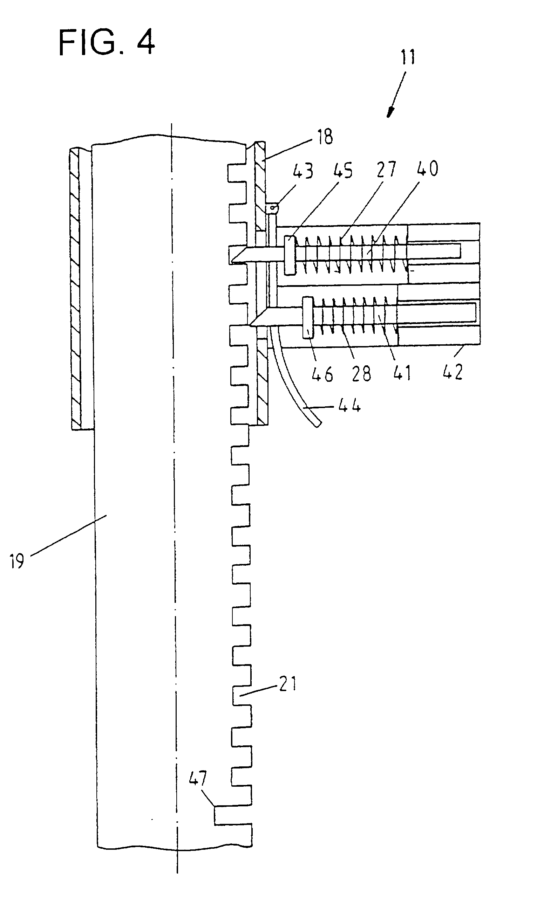

Bei der in Fig. 4 rein schematisch dargestellten Ausführungsform der Höheneinsteileinrichtung 11 ist prinzipiell der gleiche Aufbau vorgesehen, wobei die Sperrklinken 23, 24 als Arretierbolzen 40, 41 ausgebildet sind, die in einem Gehäuse 42 geführt und durch gegen das Gehäuse 42 abgestützte Druckfedern 27, 28 in ihrer die Bewegung des Rohres 19 sperrende Raststellung gehalten werden. Die am Rohr 19 bei 43 angelenkte schwenkhebelartige Handhabe 44 beaufschlagt bei einer Schwenkbewegung nacheinander die Anschlagringe 45, 46, wobei der Anschlagring 45 auf dem Arretierbolzen 41 angeordnet ist. Durch die zwei zueinander in Richtung der Längsachse L versetzt angeordneten Arretierbolzen 40, 41 erreicht man eine Feinrastung. Die das Rasterprofil bildenden Kerben 21 können dabei in größeren Abstand zueinander angeordnet werden. Der Vorteil ist eine größere Stabilität.

Bei 47 ist eine als vertiefte Nut ausgebildete Kerbe für den Transport vorgesehen.

Bei allen Ausführungsformen der Höheneinstelleinrichtung 11 ist vorgesehen, daß die Eingreifspitzen 51 der Sperrklinken 23, 24 an einer Seite eine schräge Ebene 52 aufweisen, um ein automatisches Entriegeln bei entsprechender Bewequng des Rohres 19 zu ermöglichen.

Durch die beiden Sperrklinken 23, 24 wird ebenfalls bei allen Ausführungsformen eine feine Rasterung erreicht. Alle Ausführungsformen können bei allen Einsatzzwecken verwendet werden.

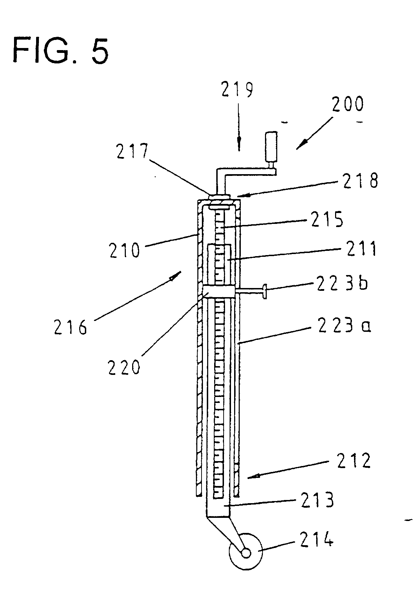

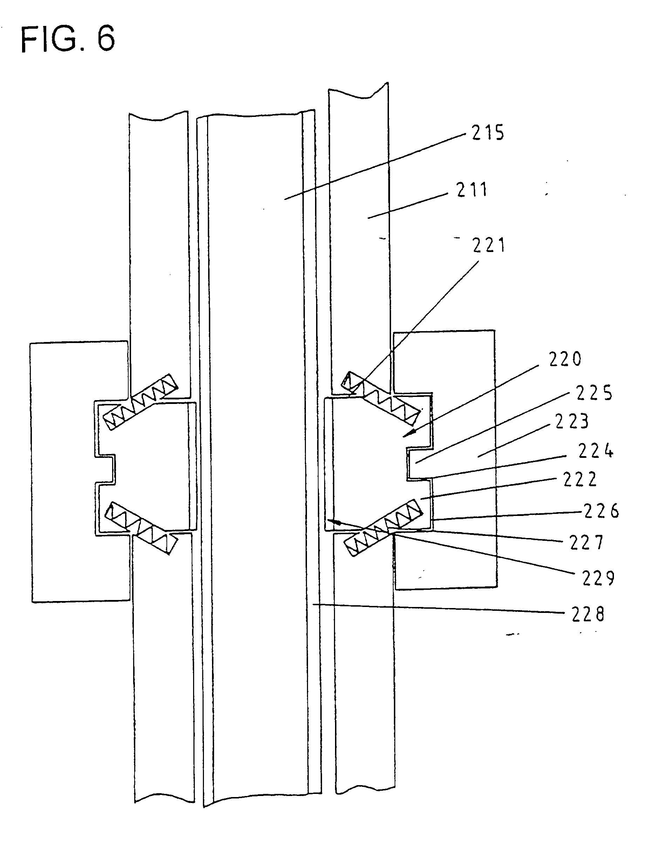

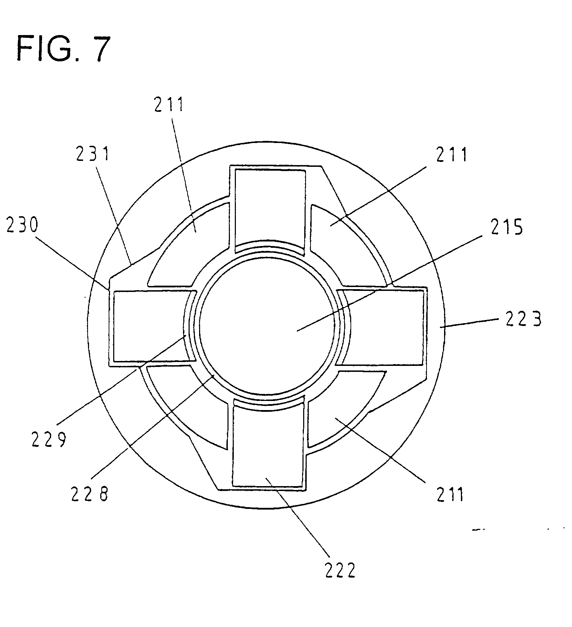

Die Hebevorrichtung 200 gemäß Fig. 5 besteht aus einem äußeren Rohr 210, das fest mit einer nicht dargestellten Deichsel in einem geeigneten Winkel verbunden ist. In dem äußeren Rohr 210 ist verschiebbar ein inneres Rohr 211 gelagert, das an dem der Deichsel abgewandten Ende 212 des äußeren Rohres 210 herausragt. An dem herausragenden Teil 213 des inneren Rohres 211 ist ein Stützrad 214 befestigt. Im Inneren des inneren Rohres 211 ist eine Gewindestange 215 gelagert, die aus dem dem Stützrad 214 entgegengesetzten Ende 216 des inneren Rohres 211 und des äußeren Rohres herausragt. Am äußeren Rohr 210 ist die Gewindestange 215 mittels eines Gleitlagers 217 axial fixiert bzw. drehbar gelagert. In dem Bereich 218, der vom Gleitlager 217 umfaßt wird, weist die Gewindestange 215 kein Gewinde auf. An diesen Bereich 218 schließt sich eine Handhabe in Form einer Handkurbel 219 an. Das innere Rohr 211 ist gegenüber der Gewindestange 215 mittels eines Gewindekörpers 220 abgestützt (Fig. 6 und 7).

Dazu sind in dem inneren Rohr 211 Durchgangsöffnungen 221 eingebracht, durch die Segmente 222 des Gewindekörpers 220 zur Gewindestange 215 geführt sind.

Der nach außen herausragende Teil der Segmente wird von einem umlaufenden Druckring 223 umfaßt, wobei die Segmente 222 eine horizontal verlaufende Nut 224 aufweisen, die mit einer entsprechenden Feder 225 an der Innenwandung 226 des Druckringes 223 korrespondiert. Der Druckring 223 umfaßt die Segmente 222 von drei Seiten. Die Segmente 222 werden mittels einer Druckfeder 227, die sich an dem inneren Rohr 211 und dem jeweiligen Segment 222 abstützt, von dem Gewinde 228 der Gewindestange 215 weggedrückt, so daß das Gewinde 228 der Gewindestange 215 und die Gewinde 229 der Gewindekörper 220 nicht in Kontakt kommen. Damit der Druckring 223 betätigt werden kann, ist in dem äußeren Rohr 210 ein vertikal verlaufender Schlitz 223a vorgesehen, durch den eine Handhabe 223b geführt ist,
mittels der der Druckring 223 betätigt wird.

Der Kontakt wird durch Verdrehen des Druckringes 223 hergestellt. Dadurch wird das jeweilige Segment 222, das in einer entsprechenden Vertiefung 230 an der Innenwandung 226 des Druckrings ruht, durch Beaufschlagung des Segments 222 mit Druck durch eine Schräge 231, die von der Vertiefung 230 in Richtung des inneren Rohres 211 führt, mit der Gewindestange 215 in Kontakt gebracht.

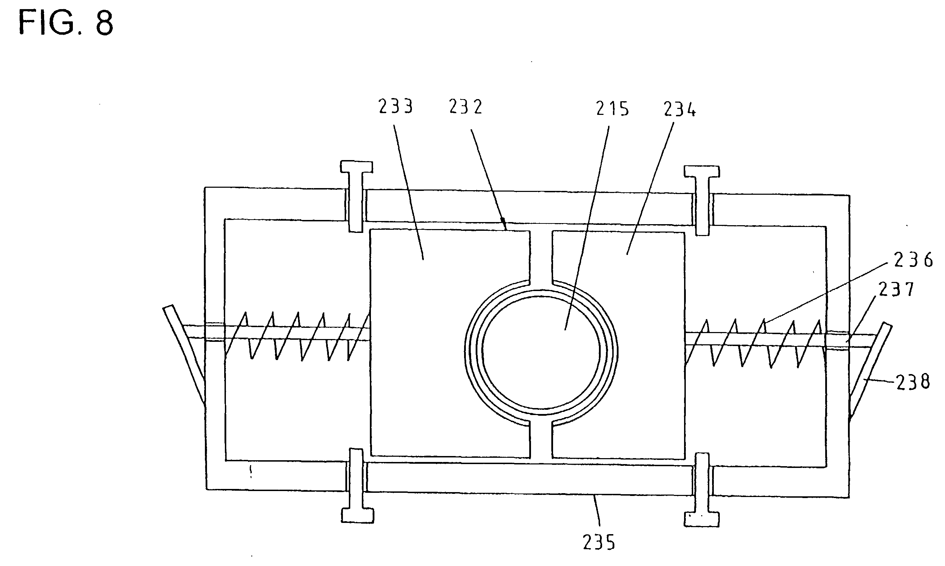

Fig. 8 zeigt eine Vorrichtung zur Verbindung der Gewindestange 215 mit dem inneren Rohr, die anstatt der Ausführungsform mit dem Gewindekörper 220 und dem Druckring 223 verwandt wird.

Hierzu ist ein zweigeteilter Mutternkörper 232 vorgesehen, der die Gewindestange 215 allseitig umgreift. Die beiden Teile 233, 234 des Mutternkörpers 232 weisen zusammengelegt eine rechteckige Form auf und sind in einem Gehäuse 235 horizontal verschiebbar gelagert, wobei das Gehäuse 235 im rechten Winkel zur Gewindestange 215 am inneren Rohr 211 festgelegt ist.

Die beiden Teile 233, 234 werden jeweils mittels einer Druckfeder 236, die sich am Gehäuse 235 und einem Teil 233 bzw. 234 abstützt, zur Gewindestange 215 gedrückt und mit dieser in Kontakt gebracht. Die Teile 233, 234 des Mutternkörpers 232 sind mit einer Ziehachse 237, die auf der der Gewindestange 215 abgewandten Seite befestigt sind, versehen. Diese Ziehachsen 237 werden aus dem Gehäuse 235 herausgeführt und sind dort mit einer Handhabe 238 versehen.

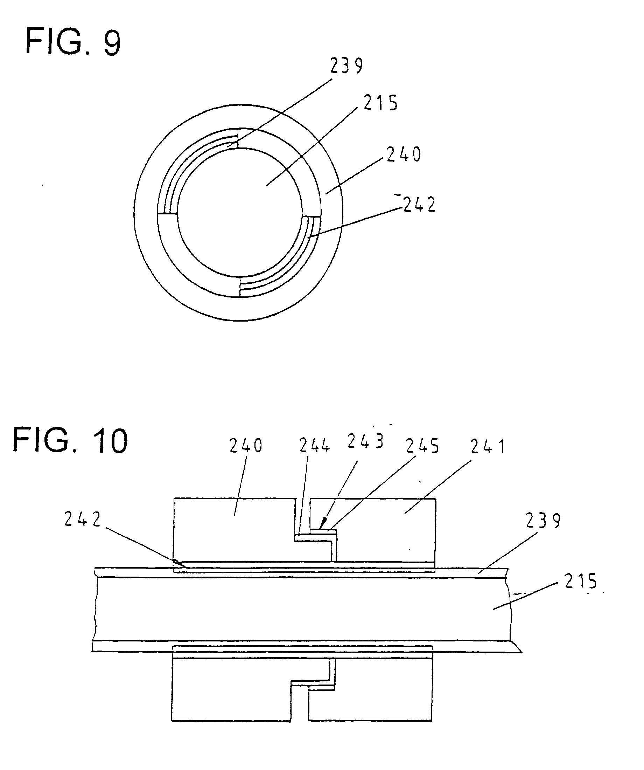

Die Fig. 9 und 10 zeigen eine weitere Vorrichtung zur Verbindung der Gewindestange 215 mit dem inneren Rohr 211.

Hier weist die Gewindestange 215 ein Außengewinde 239 auf, das in 90°-Schritten unterteilt ist und zwar derart, daß es alternierend Bereiche ohne und mit Außengewinde 239 gibt. Zur Verbindung mit dem inneren Rohr 211 sind zwei Muttern 240, 241 vorgesehen, wobei die eine Mutter 240 über ein gleichartig unterteiltes Gewinde 242 verfügt wie die Gewindestange 215. In entsprechender Stellung ist diese Mutter 240 frei auf der Gewindestange 215 verschiebbar. Die andere Mutter 241 verfügt über durchgehende Gewindegänge.

Die Mutter 240 mit dem unterteilten Gewinde 242 weist in einem eingezogenem Bereich 243 ein Außengewinde 244 auf, auf das die andere Mutter 241 mittels eines zweiten Innengewindes 245 aufschraubbar ist. Eine der Muttern 240, 241 ist am inneren Rohr 211 festgelegt.

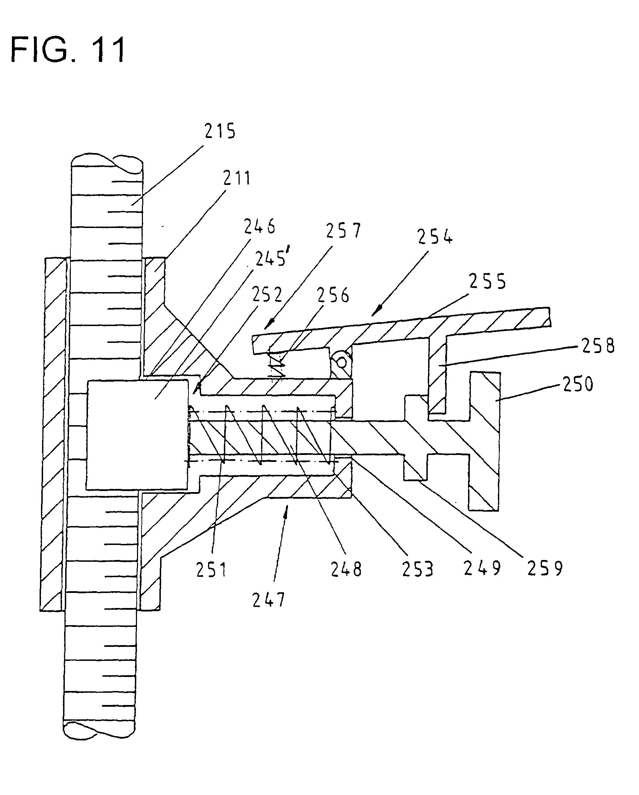

Die Fig. 11 zeigt noch eine weitere Ausführungsform der Vorrichtung zur Höhengrobeinstellung bzw. zur Verbindung der Gewindestange 215 mit dem inneren Rohr 211.

Hier wird die Gewindestange 215 von einem Mutternkörper 245' in einem Bereich von 180° umfaßt. Dieser Mutternkörper 245' ist durch eine Durchgangsöffnung 246 im inneren Rohr 211 geführt. Die Durchgangsöffnung 246 wird von einem Gehäuse 247 überdeckt, in dem u.a. der Mutternkörper 245 gelagert ist. Der Mutternkörper 245' weist auf der der Gewindestange 215 abgewandten Seite einen Ziehbolzen 248 auf, der über eine Öffnung 249 nach außen geführt ist und eine Handhabe 250 aufweist.

Der Mutternkörper 245' wird durch eine Spiralfeder 251, in der mittig der Ziehbolzen 248 befindlich ist, gegen die Gewindestange 215 gepreßt.

Die Spiralfeder 251 ist dabei an der Rückseite 252 des Mutternkörpers 245' und der Innenwandung 253 des Gehäuses 247 abgestützt. Der Ziehbolzen 248 kann gelenkig mit dem Mutternkörper 245' verbunden sein, wobei er dann einen seitlichen Fortsatz, der hier nicht dargestellt ist, aufweist, der in einer L-förmigen Nut in der Innenwandung 253, oder an einem Z-Profil o.dgl. entlangläuft, so daß durch Verdrehung der Handhabe 250 eine Arretierung möglich ist.

Auf der Außenseite 254 des Gehäuses 247 ist ein Arretierbolzen 255 in Form einer Wippe angelenkt, der mittels einer Druckfeder 256, die an der Außenseite 254 und dem zur Gewindestange 215 weisenden Ende 257 des Arretierbolzens 255 abgestützt ist, in Richtung der Handhabe 250 drückt. Dabei greift ein seitlicher Fortsatz 258 des Arretierbolzen 255 hinter einen Sicherungsring 259, der sich am Ziehbolzen 248 befindet. Es kann aber auch vorgesehen sein, daß der seitliche Fortsatz zur Sicherung, bei Anliegen des Mutternkörpers 245' an der Gewindestange 215, die Handhabe 250 hintergreift.

In der Fig. 12 ist eine Hebevorrichtung 300 dargestellt, wobei die Deichsel und das äußere Rohr nicht abgebildet sind.

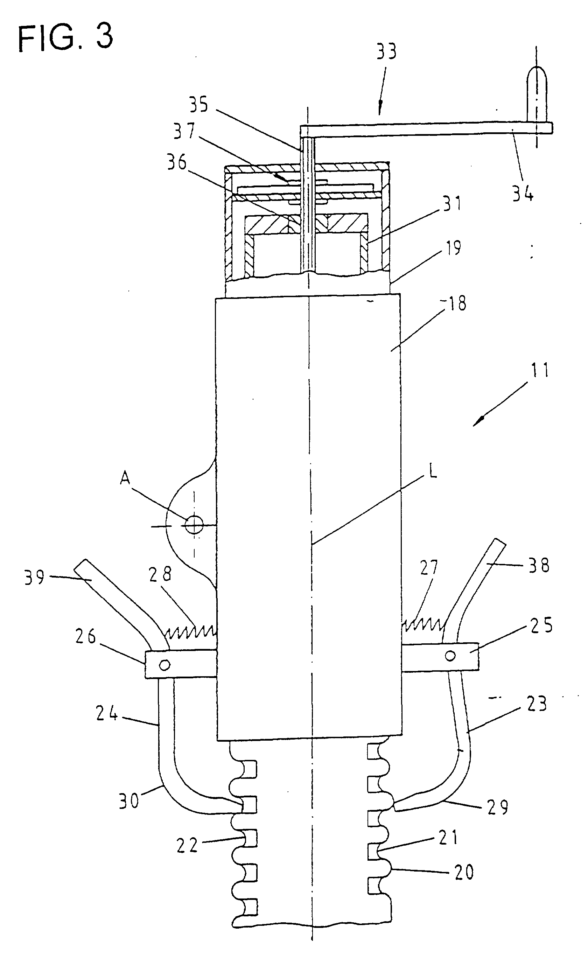

Das innere Rohr 310 weist ein Rasterprofil 311 mit Kerben 312 gemäß der Ausführungsform der Fig. 3 und 4 auf.

In dem ersten inneren Rohr 310 ist ein weiteres inneres Rohr (innerstes Innenrohr) 313 verschiebbar gelagert. Das weitere innere Rohr 313 ragt auf der einen Seite, d.h. bodenseitig aus dem ersten inneren Rohr 310 hinaus. An dem herausragendem Teil 314 des weiteren inneren Rohres 313 ist ein Stützrad 315 drehbar befestigt.

In das weitere innere Rohr 313 ist eine Gewindestange 316 eingeschraubt, die auf der dem Stützrad 315 gegenüberliegenden Seite herausragt. Dabei ist die Gewindestange 316 in einer Durchgangsbohrung 317 mittels eines Gleitlagers 318 in der verschlossenen Seite 319 des ersten inneren Rohres 310 drehbar gelagert. Der herausragende Teil 320 der Gewindestange 316 ist gelenkig mit einer erfindungsgemäßen Handkurbel 321 mit einem Drehknopf 322 verbunden.

Zur Verbindung wird ein Kupplungsglied 323 verwendet. Die Handkurbel 321 bzw. der Teil 324, der am Kupplungsglied 323 angelenkt ist, wird über den Drehpunkt hinaus geführt und weist an dem dem Drehknopf 322 entgegengesetzten Ende einen rechtwinklig daran festgelegten Arretierbolzen 325 auf, der in Richtung des inneren Rohres 310 weist.

Am Außenumfang 326 des ersten inneren Rohres 310 im Bereich der Oberkante 327 ist eine Verzahnung 328 angebracht, in die der Arretierbolzen 325 eingreift. Dabei wird die Handkurbel 321 durch Federkraft in der arretierten Position gehalten. Die Feder 329 ist am Kupplungsglied 323 an eine Federhalterung 330 und an dem am Kupplungsglied angelenkten Teil 324 abgestützt, wobei der Drehknopf vom inneren Rohr 310 weggedrückt wird.

Des weiteren zeigt Fig. 12 eine Einrichtung 331 zur automatischen Positionierung des Stützrades 315. Dazu ist die zum Stützrad 315 gewandte Unterkante 332 des ersten inneren Rohres 310 abgeschrägt und das herausragende Teil 314 des weiteren inneren Rohres 313 ist mit einem kleinen Rad 333 versehen. Das Rad 333 ist auf einer Achse 334 drehbar gelagert, die im rechten Winkel vom weiteren inneren Rohr 313 absteht. Wenn die Gewindestange 316 vollständig in das weitere innere Rohr 313 eingeschraubt ist, so liegt das Rad 333 an dem Punkt der abgeschrägten Unterkante 332 an, der dem Stützrad 315 am weitesten entfernt liegt.

Fig. 13 zeigt eine Ausführungsvariante einer erfindungsgemäßen Handkurbel 335 mit Arretierung, wobei die Handkurbel 335 fest mit der Gewindestange 316 verbunden ist. Der Drehknopf 336 der Handkurbel 335 weist im Inneren eine Druckfeder 337 auf. Uber einen Bolzen 338 der vom Inneren des Drehknopfes 336 in den Teil 339 führt, der den Drehknopf 336 mit der Gewindestange 316 verbindet, ist der Drehknopf 336 gelenkig mit einer Wippe 340 verbunden. Die Wippe 340 ist in dem Teil 339, das als einseitig offenes Hohlprofil ausgeführt ist, angeordnet und in etwa mittig angelenkt. Das vom Bolzen 338 entgegengesetzten Ende 341 der Wippe 340 verfügt über einen Arretierbolzen 342, der in eine bei Punkt 343 angedeutete Verzahnung zur Arretierung eingreift.

Es ist möglich, daß der Standfuß 12 aus einem langgestreckten Metallprofil besteht, das einendseitig derart an der Deichsel 10 angelenkt ist, daß die Drehachse des Standfußes 12 im rechten Winkel zur Deichsel 10 steht, und daß an dem anderen Ende 15 des Standfußes 12 die Aufstands- oder Abrollvorrichtung befestigt ist, und daß das äußere Rohr 18 schwenkbar an der Deichsel 10 angelenkt ist.

Auch ist daran gedacht, daß die Abrollvorrichtung aus einer abgerundeten Abrollplatte 17 besteht, oder daß die Abrollvorrichtung aus einem Rad besteht.

Vorteilhaft ist auch, daß das Rad über eine Arretierungseinrichtung verfügt.

Eine Variante zeigt, daß der Druckring 223 die Segmente 222 dreiseitig umfaßt.

Auch kann vorgesehen sein, daß das Gehäuse 235 am inneren Rohr 211 festgelegt ist.

Insbesondere kann ebenfalls vorgesehen sein, daß das Gehäuse 235 an dem aus dem äußeren Rohr 210 herausragendem Teil 213 des inneren Rohres 211 festgelegt ist.

Vorteilhaft ist, daß der Ziehbolzen 248 an seinem freien Ende eine Handhabe 250 aufweist.

Eine andere Ausführungsform besteht darin, daß die Handkurbel 321 mit einer Arretierungsvorrichtung ausgestattet ist.

Es wird vorgeschlagen, daß die Verzahnung am Außenumfang umlaufend des ersten inneren Rohres 310 ausgebildet ist.

Alternativ ist es möglich, daß die Verzahnung auf der das erste innere Rohr 310 verschließenden Kreisfläche zur Handhabe hin umlaufend angeordnet ist.

Schließlich ist auch daran gedacht, daß die Handhabe über einen Freilauf mit der Gewindestange verbunden ist und daß die Verzahnung in Form eines Zahnkranzes fest mit der Gewindestange verbunden ist, die mittig durch den Zahnkranz geführt ist.

Die in der Beschreibung sowie in den nachfolgenden Patentansprüchen verwendeten Begriffe Rohre, Innenrohre und Außenrohre umfassen generell langgestreckte Elemente, die entsprechend ineinander fügbar sind. Beispielsweise können innenliegende Teile, die als Rohr bezeichnet sind, auch massiv als Stange oder teilmassiv ausgebildet sein. Ebenfalls ist es möglich, daß als Gewindestange bezeichnete Teile nicht tatsächlich massiv, sondern lediglich teilmassiv oder rohrartig ausgebildet sind.

Bei einigen Ausführungsformen wurde angegeben, daß ein als Fuß bezeichnetes Standelement an inneren Bauteilen angeordnet ist. Grundsätzlich ist auch eine komplementäre Ausbildung denkbar, wo der Fuß im Bereich des Außenrohres montiert ist. Gleichfalls ist es gemäß einer Bauvariante möglich, daß nicht das äußere Rohr am Fahrzeug oder einem anderen tragenden Teil angeschlagen ist, sondern daß das innere Rohr aus der Anordnung heraussteht und am Fahrzeug angeschlagen ist und daß das äußere Rohr teleskopartig positioniert wird.

Zur Erleichterung einer Rückstellung ist es möglich, die relativ zueinander teleskopierbaren Teile durch einen elastischen Zugkörper miteinander zu koppeln. Beispielsweise ist es möglich, das teleskopierbare Element relativ zum umbeweglichen Element beziehungsweise relativ zum tragenden Fahrzeug oder zu einem anderen Träger, elastisch zu verspannen. Die elastische Verspannung kann beispielsweise über einen Gummizug erfolgen, bei einer linearen Anordnung sind auch Spiralfedern oder vergleichbare Elemente zweckmäßig. Bei Verwendung eines Gummizuges kann zur Materialschonung eine rollenartige Umlenkung für den Gummizug vorgesehen sein. Zweck dieser Rückführeinrichtung ist es, bei einem Lösen des Schnellrasters die Rückführung in die Ausgangsposition zu beschleunigen. Es sind somit hierbei keine zusätzlichen Bedienoperationen erforderlich.

Die Dimensionierung der Rückführvorrichtung kann nach unterschiedlichen Gesichtspunkten erfolgen. Neben der bereits beschriebenen Dimensionierung, bei der eine Rückführung automatisch ausgelöst wird, ist es auch möglich, die Federkräfte so zu gestalten, daß lediglich Gewichtskräfte kompensiert werden. Bei einem Lösen der Rastung würde dann keine automatische Rückführung erfolgen, bei einer manuellen Rückführung sind jedoch nur minimale Kräfte aufzubringen.

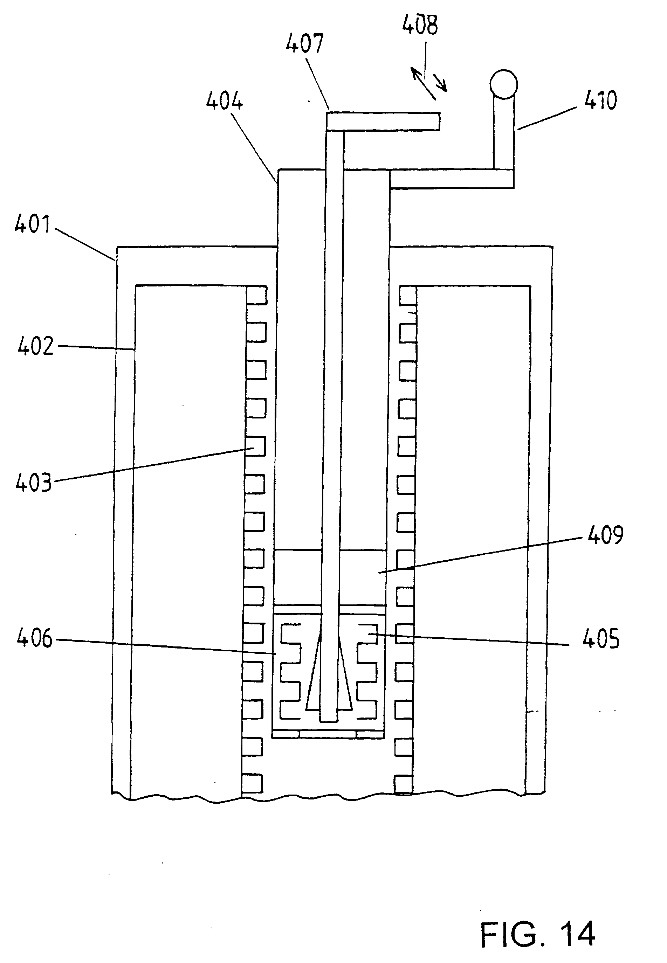

Fig. 14 zeigt eine zusätzliche Variante. In einem Außenrohr 401 ist ein Innenrohr 402 angeordnet, das im Bereich seiner dem Außenrohr 401 abgewandten Innenausdehnung mit einem Gewinde 403 versehen ist. Innerhalb des Innenrohres 402 ist ein Zentralrohr 404 geführt, innerhalb dessen ein spreizbarer Gewindekörper 405 angeordnet ist. Der Gewindekörper 405 kann mit seiner Gewindeprofilierung durch Ausnehmungen 406 des Zentralrohres 404 hindurchgeführt werden und greift dabei in das Gewinde 403 des Innenrohres 402 ein.

Zur Durchführung des Spreizvorganges des Gewindekörpers 405 ist ein Stellelement 407 vorgesehen, das als eine Stange ausgebildet sein kann. Das Stellelement 407 ist mit einer Auslösevorrichtung 408 gekoppelt, die entweder einen Spreizvorgang des Gewindekörpers 405 durchführt, oder eine Rückführung des Gewindekörpers 405 in die Ausgangsposition veranlaßt. Der Spreizvorgang kann beispielsweise durch konisch geformte Elemente im Bereich des Gewindekörpers verursacht werden, die in einer Längsrichtung des Stellelementes 407 verschieblich sind. Ebenfalls können verdrehbare exzentrische Bauteile verwendet werden. Zur Verhinderung eines Verschiebens des Gewindekörpers 405 ist oberhalb des Gewindekörpers 405 ein Halteelement 409 in das Zentralrohr 404 eingesetzt. Durch das Halteelement 409 ist das Stellelement 407 hindurchgeführt. Bei einem Eingriff des Gewindekörpers 405 in das Gewinde 403 ist es möglich, das Zentralrohr 404 mit Hilfe einer Kurbel 410 zu drehen und das Zentralrohr 404 relativ zum Innenrohr 402 zu verschieben. Es ist somit möglich, zunächst bei einer Trennung von Gewindekörper 405 und Gewinde 403 eine schnelle Längsverstellung von Zentralrohr 404 und Innenrohr 402 relativ zueinander vorzunehmen und nach einem Eingriff des Gewindekörpers 405 in das Innengewinde 403 eine Feinverstellung mit Hilfe der Kurbel 410 durchzuführen.

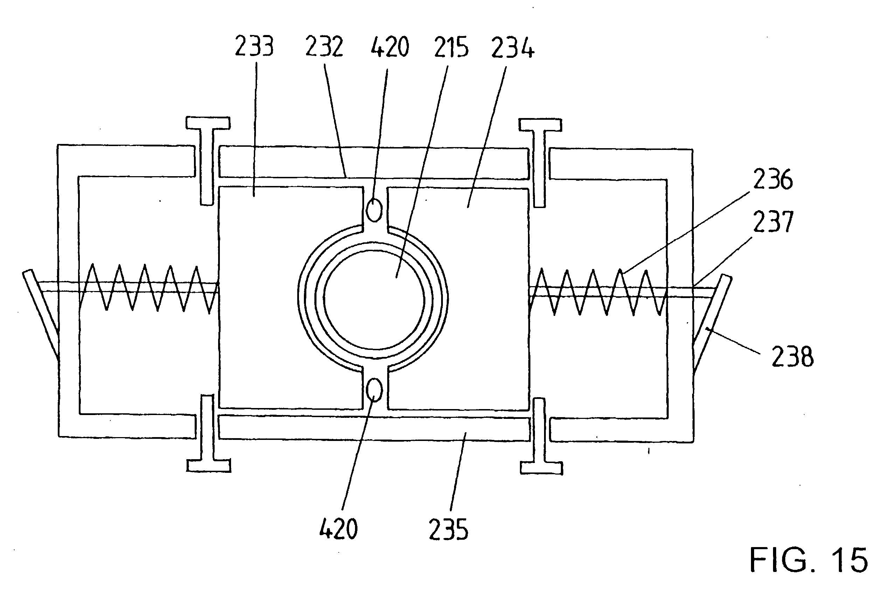

In Fig. 15 ist eine Variante zur Ausführungsform gemäß Fig. 8 angegeben. Zwischen den Bauelementen 233, 234 sind Exzenterelemente 420 angeordnet, die eine Trennung des Gewindekörpers beziehungsweise der beiden Teile des Gewindekörpers vom zentralen Gewinde verursachen und eine relative Verschiebung zueinander erlauben. Durch Verwendung dieser Exzenterelemente 420 ist möglich, ohne Beinträchtigung der Funktionsfähigkeit bei der Ausführungsform in Fig. 15 die Bauelemente 236, 237, 238 wegzulassen. Es erfolgt somit eine erhebliche Vereinfachung der Bauausführung. Grundsätzlich ist es aber ebenfalls denkbar, die Exzenterelemente 420 zusätzlich anzuordnen, wie dies in Fig. 15 dargestellt ist.

## Patentansprüche

1. Hebevorrichtung (300), insbesondere für eine Stütz- und Trageinrichtung wie für die Deichsel (10) von Fahrzeug hängern o. dgl, wobei die Hebevorrichtung (390) einen Standfuss (12), ein Stützrad (315) und eine Höheneinstellvorrichtung (11) aufweist, wobei die Höheneinstellvorrichtung aus ineinander verschiebbaren Rohren (310, 313) besteht, wobei in dem innersten Innenrohr (313) eine Gewindestange (316) gelagert ist, und wobei weiterhin das innerste Innenrohr (313) einendseitig mit dem Standfuss (12) oder dem Stützrad (315) verbunden ist, die Gewindestange (316) auf der dem Stützrad (315) abgewandten Seite eine Handhabe (321, 335) aufweist, die Gewindestange (316) mit dem innersten Innenrohr (313) in Wirkverbindung derart steht, dass dieses bei Drehbetätigung der Handhabe und damit der Gewindestange gegenüber der Gewindestange in Längsrichtung verstellbar ist, und das äußerste Rohr (18) gegenüber dem nächstliegenden inneren Rohr (310) frei verschiebbar und mittels einer Arretierungsvorrichtung arretierbar ist, **dadurch gekennzeichnet, dass** die Handhabe (321, 335) eine weitere Arretierungsvorrichtung aufweist, die wippenartig ausgebildet ist, und dass im Schwenkbereich der weiteren Arretiervorrichtung eine Verzahnung vorgesehen ist, wobei durch Herunterdrücken der Handhabe die Arretierungsvorrichtung aus einer Sperrposition bewegbar ist, so dass durch Drehen der Handhabe eine Höhenfeineinstellung erfolgen kann.

2. Hebevorrichtung nach Anspruch 1, **dadurch gekennzeichnet, dass** die wippenartig ausgebildete Arretierungsvorrichtung an einem Ende einen Arretierbolzen (325, 342) hat, der mit einer Verzahnung (328, 343) am oberen Bereich des nächstliegenden Inneren Rohrs (310) in seinen Schwenkbereich in Eingriff bringbar ist.

3. Hebevorrichtung nach Anspruch 2, **dadurch gekennzeichnet, daß** die Handhabe eine Handkurbel (321) aufweist, die mittels eines Kupplungsgliedes (323) gelenkig mit der Gewindestange (316) verbunden ist und über eine sich am Kupplungsglied (323) abstützende Feder (329) mit einer Kraft beaufschlagbar ist.

4. Hebevorrichtung nach Anspruch 2, **dadurch gekennzeichnet, daß** die Handhabe eine Handkurbel (335) aufweist, die drehfest mit der Gewindestange (316) verbunden ist und einen Drehknopf (336) hat, der von einer sich auf der Handkurbel (335) abstützenden Druckfeder (337) beaufschlagt ist und über einen Bolzen (338) mit einer Wippe (340), an deren dem Drehknopf (336) entgegengesetzten Ende der Arretierbolzen (342) ausgebildet ist, in Wirkverbindung steht.

5. Hebevorrichtung nach Anspruch 2, **dadurch gekennzeichnet, daß** die Gewindestange (316) in ein korrespondierendes Gewinde des innersten Innenrohres (313) eingreift, wobei es mittels eines Gleitlagers (317), das auf dem Gewinde (316) festgelegt ist, gegenüber dem ersten inneren Rohr (310) abgestützt wird, wobei das Gleitlager (317) in einer Führungsbuchse des ersten inneren Rohres (310) gegen Verschiebung entlang der Längsachse gesichert ist.

6. Hebevorrichtung nach Anspruch 5, **dadurch gekennzeichnet, daß** die Gewindestange (35; 215; 316) mit dem innersten Innenrohr (31; 211; 313) über einen Gewindekörper (220), einen zweigeteilten Mutternkörper (232, 245) oder eine Mutter (240, 241) in Wirkverbindung steht.

7. Hebevorrichtung nach Anspruch 6, **dadurch gekennzeichnet, daß** der Gewindekörper (220) aus mindestens zwei Segmenten (222) besteht, die in Durchgangsöffnungen (221) des innersten Innenrohres (211) gelagert sind und zur Gewindestange (215) hin ein Gewinde aufweisen, wobei die nach außen aus dem innersten Innenrohr (211) herausragenden Teile der Segmente (222) von einem am innersten Innenrohr (211) umlaufenden Druckring (223) umgriffen werden, wobei der Druckring (223) Vertiefungen (230) aufweist, in denen die Segmente anliegen und wobei aus den Vertiefungen (230) Schrägen (231) zur Außenwandung des innersten Innenrohres (211) führen, und daß die Segmente (222) von Druckfedern (227) beaufschlagt sind, die in Richtung des Druckrings (223) wirken und am innersten Innenrohr (221) abgestützt sind.

8. Hebevorrichtung nach Anspruch 7, **dadurch gekennzeichnet, daß** der Druckring (223) innenwandig eine umlaufende Feder (225) aufweist, die in eine korrespondierende Nut (224) der Segmente (222) eingreift.

9. Hebevorrichtung nach Anspruch 6, **dadurch gekennzeichnet, daß** der Mutternkörper (232) aus zwei Teilen (233, 234) besteht, welche die Gewindestange (215) allseitig umgreifen, wobei die äußere Form der beiden Teile (233, 234) rechteckig ist; daß beide Teile (233, 234) in einem Gehäuse (235) im rechten Winkel zur Gewindestange (215) verschiebbar gelagert sind; daß sich zwischen Gehäusewand und der dem Gewindestab (215) abgewandten Seite der Tiefe (233, 234) sich jeweils eine Druckfeder abstützt; und daß auf der gleichen Seite der Teile (233, 234) Ziehachsen (237) festgelegt sind, die aus dem Gehäuse (235) herausführen und endseitig eine Handhabe (238) aufweisen.

10. Hebevorrichtung nach Anspruch 6, **dadurch gekennzeichnet, daß** die Mutter (240) über ein Innengewinde verfügt, das alternierend in Bereiche mit und ohne Gewindegänge unterteilt ist, wobei die Gewindestange (215) über ein korrespondierend ausgebildetes Außengewinde (239) verfügt; und daß die Mutter (240) einen eingezogenen Bereich (243) mit einem Außengewinde (244) verfügt, auf das eine andere auf dem Gewindestab (215) aufgeschraubte Mutter (341) mittels eines zweiten Innengewindes (244) aufschraubbar ist.

11. Hebevorrichtung nach Anspruch 6, **dadurch gekennzeichnet, daß** der Mutternkörper (245) die Gewindestange (215) in einem Bereich von etwa 180° oder weniger umfaßt und dabei durch eine Durchgangsöffnung (246) im innersten Innenrohr (211) geführt ist, wobei ein Gehäuse (247) die Durchgangsöffnung (246) überdeckt, in welchem der Mutterkörper (245) gelagert ist; daß der Mutternkörper (245) auf der der Gewindestange (215) abgewandten Seite einen Ziehbolzen (248) aufweist, der durch eine Öffnung (249) aus dem Gehäuse (247) geführt ist; und daß sich an der Rückseite (252) des Mutternkörpers (245) und der Innenwandung (253) des Gehäuses (247) eine Spiralfeder (251) abstützt, wobei der Ziehbolzen (248) längs durch die Spiralfeder geführt ist.

12. Hebevorrichtung nach Anspruch 11, **dadurch gekennzeichnet, daß** am Gehäuse (247) außenseitig ein Arretierbolzen (255) in Form einer Wippe angelenkt ist, wobei ein Ende des Arretierbolzens (255) als Widerlager für eine Druckfeder (256) dient, die sich im übrigen an der Außenseite (254) des Gehäuses (247) abstützt und wobei das andere Ende des Arretierbolzens (255) einen seitlichen Fortsatz (258) aufweist, der einen am Ziehbolzen (248) befindlichen Sicherungsring (259) oder die Handhabe (250) hintergreift, so daß der Mutternkörper (245) fest an der Gewindestange (215) anliegt.

13. Hebevorrichtung nach Anspruch 11 oder 12, **dadurch gekennzeichnet, daß** der Ziehbolzen (248) gelenkig oder drehbar mit dem Mutternkörper verbunden ist und einen seitlichen Fortsatz aufweist, der in einer L-förmigen Nut in der Innenwandung (253) des Gehäuses (247) oder an einem Z-förmigen Profil zur Arretierung durch Verdrehung des Ziehbolzens (248) liegt.

14. Hebevorrichtung nach Anspruch 11, 12 oder 13, **dadurch gekennzeichnet, daß** der Ziehbolzen (248) in mindestens 2 Positionen in Relation zur Gewindestange (215) arretierbar ist.

## Claims

1. A lifting device (300), in particular for supporting and carrying means such as for the drawbar (10) of vehicle trailers etc., wherein said lifting device (390) comprises a stand (12), a jockey wheel (315) and a height adjustment means (11), wherein said height adjustment means consists of telescoping tubes (310, 313), wherein inside said innermost inner tube (313) a threaded rod (316) is mounted, and wherein moreover said innermost inner tube (313) is connected on the side of one end thereof with said stand (12) or said jockey wheel (315), said threaded rod (316) has on the side opposite from said jockey wheel (315) a handle (321, 335), said threaded rod (316) is in operative connection with said innermost inner tube (313) such that the latter may be adjusted in the longitudinal direction relative to said threaded rod upon rotating actuation of said handle and thus of said threaded rod, and said outermost tube (18) is freely slidable relative to said closest inner tube (310) and capable of being immobilized by means of a locking device, **characterized in that** said handle (321, 335) includes a further locking device which is of a rocker-type design, and that a denticulation is provided in the pivotal range of said further locking device, wherein said locking device may be moved out of a locked position by pressing down said handle so that a fine height adjustment may be effected by rotating said handle.

2. The lifting device in accordance with claim 1, **characterized in that** said rocker-type locking device has on one end a retention bolt (325, 342) capable of being engaged with a denticulation (328, 343) at the upper range of the closest inner tube (310) in its pivotal range.

3. The lifting device in accordance with claim 2, **characterized in that** said handle comprises a crank (321) in articulated connection with said threaded rod (316) through the intermediary of a coupling member (323) and capable of receiving application of a force through the intermediary of a spring (329) which is supported on said coupling member (323).

4. The lifting device in accordance with claim 2, **characterized in that** said handle has a crank (335) that is fixedly connected with said threaded rod (316) and has a turning knob (336) which is acted on by a pressure spring (337) supported on said crank (335), and which via a bolt (338) is in operative connection with a rocker (340) at the one end of which opposite from said turning knob (336) said retention bolt (342) is formed.

5. The lifting device in accordance with claim 2, **characterized in that** said threaded rod (316) engages a corresponding thread of said innermost inner tube (313), wherein it is supported against said first inner tube (310) through the intermediary of a slide bearing (317) fixed on said thread (316), wherein said slide bearing (317) is secured against displacement along the longitudinal axis in a guide bush of said first inner tube (310).

6. The lifting device in accordance with claim 5, **characterized in that** said threaded rod (35; 215; 316) is in operative connection with said innermost inner tube (31; 211; 313) through the intermediary of a threaded body (220), a two-part nut body (232, 245), or a nut (240, 241).

7. The lifting device in accordance with claim 6, **characterized in that** said threaded body (220) consists of at least two segments (222) mounted in through openings (221) of said innermost inner tube (211) and having a thread towards said threaded rod (215), wherein those sections of said segments (222) projecting from said innermost inner tube (211) are encompassed by a thrust collar (223) encircling said innermost inner tube (211), wherein said thrust collar (223) has depressions (230) which said segments contact, and wherein from said depressions (230) oblique sections (231) lead to the outer wall of said innermost inner tube (211), and that said segments (222) are acted on by pressure springs (227) acting in the direction towards said thrust collar (223) and supported at said innermost inner tube (221).

8. The lifting device in accordance with claim 7, **characterized in that** said thrust collar (223) includes at the inner wall a circular spring (225) which engages a corresponding groove (224) of said segments (222).

9. The lifting device in accordance with claim 6, **characterized in that** said nut body (232) consists of two parts (233, 234) encompassing said threaded rod (215) on all sides, wherein the external shape of said two parts (233, 234) is rectangular; that both parts (233, 234) are mounted in a housing (235) so as to be displaceable at a right angle with said threaded rod (215); that between housing wall and that side of said parts (233, 234) facing away from said threaded rod (215) one respective pressure spring each is supported; and that on the same side of said parts (233, 234) pull axles (237) are secured which protrude from said housing (235) and have a handle (238) on the end side.

10. The lifting device in accordance with claim 6, **characterized in that** said nut (240) possesses an internal thread alternatingly subdivided into portions with and without threads, wherein said threaded rod (215) possesses a correspondingly formed external thread (239); and that said nut (240) possesses a retracted section (243) with an external thread (244) on which another nut (341) that is screwed onto said threaded rod (215) may be screwed with the aid of a second internal thread (244).

11. The lifting device in accordance with claim 6, **characterized in that** said nut body (245) encompasses said threaded rod (215) in a range of approximately 180° or less while being passed through a through opening (246) in said innermost inner tube (211), wherein a housing (247) covers said through opening (246) in which said nut body (245) is mounted; that said nut body (245) has on the side facing away from said threaded rod (215) a pull bolt (248) protruding through an opening (249) from said housing (247); and that on the back side (252) of said nut body (245) and on said inner wall (253) of said housing (247) a coil spring (251) is supported, wherein said pull bolt (248) longitudinally extends through said coil spring.

12. The lifting device in accordance with claim 11, **characterized in that** a retention bolt (255) having the form of a rocker is linked to the outside of said housing (247), wherein one end of said retention bolt (255) serves as a buttress for a pressure spring (256) that is on the other hand supported on the outside (254) of said housing (247), and wherein said other end of said retention bolt (255) has a lateral extension (258) hooked into a retaining ring (259) located on said pull bolt (248) or into said handle (250), so that said nut body (245) firmly contacts said threaded rod (215).

13. The lifting device in accordance with claim 11 or 12, **characterized in that** said pull bolt (248) is in an articulated or rotary manner connected with said nut body and has a lateral extension which lies in an L-shaped groove in said inner wall (253) of said housing (247) or at a Z-shaped profile member etc. for immobilization by turning said pull bolt (248).

14. The lifting device in accordance with claim 11, 12 or 13, **characterized in that** said pull bolt (248) may be immobilized in at least 2 positions relative to said threaded rod (215).

## Revendications

1. Dispositif élévateur (300), en particulier pour un dispositif de soutien et de portage tel que pour le timon d'attelage (10) de remorques ou analogue, dans lequel le dispositif de levage (390) comporte un pied fixe (12), une roue de béquille (315) et un dispositif de réglage en hauteur (11), dans lequel le dispositif de réglage en hauteur se compose de tubes (310, 313) mobiles l'un dans l'autre, dans lequel une tige filetée (316) est placée dans le tube intérieur le plus à l'intérieur (313), et dans lequel le tube intérieur le plus à l'intérieur (313) est en outre relié à un côté d'extrémité au pied fixe (12) ou à la roue de béquille (315), la tige filetée (316) sur le côté détourné de la roue de béquille (315) comporte une manette (321, 335), la tige filetée (316) est en liaison active avec le tube intérieur le plus à l'intérieur (313) de telle sorte que celui-ci peut être déplacé dans le sens longitudinal en appliquant une rotation à la manette et par conséquent à la tige filetée, et le tube le plus à l'extérieur (18) peut être déplacé librement par rapport au tube intérieur adjacent (310) et verrouillé au moyen d'un dispositif d'arrêt, **caractérisé en ce que** la manette (321, 335) comporte un autre dispositif d'arrêt configuré de manière basculante, et **en ce qu'**une denture est prévue au niveau de sa zone de pivotement dudit autre dispositif d'arrêt, dans lequel en poussant la manette vers le bas le dispositif d'arrêt peut être déplacé depuis une position de verrouillage, de telle sorte qu'il se produit un réglage en hauteur par une rotation de la manette.

2. Dispositif de levage selon la revendication 1, **caractérisé en ce que** le dispositif d'arrêt configuré de manière basculante est du type à bascule et a un boulon d'arrêt (325, 342) au niveau d'une extrémité, qui peut être mis en prise dans sa zone de pivotement avec une denture (328, 343) dans la zone supérieure du tube intérieur adjacent (310).

3. Dispositif de levage selon la revendication 2, **caractérisé en ce que** la manette comporte une manivelle (321), qui est articulée sur la tige filetée (316) au moyen d'un élément d'accouplement (323) et peut être sollicitée par une force par l'intermédiaire d'un ressort (329) prenant appui sur l'élément d'accouplement (323).

4. Dispositif de levage selon la revendication 2, **caractérisé en ce que** la manette comporte une manivelle (335) qui est reliée à une tige filetée (316) de manière à résister à la torsion et a un bouton tournant (336), qui est sollicité par un ressort de pression (337) prenant appui sur la manivelle (335) et est en liaison active par l'intermédiaire d'un boulon (338) avec une bascule (340), sur laquelle le boulon d'arrêt (342) est formé à l'extrémité opposée au bouton tournant (336).

5. Dispositif de levage selon la revendication 2, **caractérisé en ce que** la tige filetée (316) engrène dans un filetage correspondant du tube intérieur le plus à l'intérieur (313), dans lequel il est supporté en face du premier tube intérieur (310) au moyen d'un palier à glissement (317), qui est fixé sur le filetage (316), dans lequel le palier à glissement (317) est protégé dans une douille de guidage du premier tube intérieur (310) d'un déplacement le long de l'axe longitudinal.

6. Dispositif de levage selon la revendication 5, **caractérisé en ce que** la tige filetée (35 ; 215 ; 316) est en liaison active avec le tube intérieur le plus à l'intérieur (31, 211 ; 313) par l'intermédiaire d'un corps fileté (220), d'un corps d'écrou séparé en deux parties (232, 245) ou d'un écrou (240, 241).

7. Dispositif de levage selon la revendication 6, **caractérisé en ce que** le corps fileté (220) est composé au moins de deux segments (222), qui sont placés dans des trous débouchant (221) du tube intérieur le plus à l'intérieur (211) et comportent un filetage pour la tige de filetage (215), dans lequel les parties des segments (222) faisant saillie hors du tube intérieur le plus à l'intérieur (211) vers l'extérieur sont enveloppés par un anneau de pression circulaire (223), dans lequel l'anneau de pression (223) comporte des creux (230), dans lesquels les segments reposent et dans lequel à partir des creux (230) des chanfreins (231) mènent à la paroi extérieure du tube intérieur le plus à l'intérieur (211), et **en ce que** les segments (222) sont sollicités par les ressorts de pression (227), qui agissent dans le sens de l'anneau de pression (223) et sont supportés sur le tube intérieur le plus à l'intérieur (221).

8. Dispositif de levage selon la revendication 7, **caractérisé en ce que** l'anneau de pression (223) comporte un ressort (225) circulant à l'intérieur de la paroi, qui engrène dans une rainure correspondante (224) des segments (222).

9. Dispositif de levage selon la revendication 6, **caractérisé en ce que** le corps d'écrou (232) se compose de deux parties (233, 234) qui enveloppent de toutes parts la tige filetée (215), dans lequel la forme extérieure des deux parties (233, 234) est rectangulaire ; **en ce que** les deux parties (233, 234) sont placées dans un carter (235) en angle droit par rapport à la tige filetée (215) de manière à pouvoir être déplacées ; **en ce que** un ressort de pression s'appuie respectivement entre la paroi du carter et le côté du creux (233, 234) détourné de la tige filetée (215) ; et **en ce que** des axes de traînée (237) sont fixés sur le même côté des pièces (233, 234), qui sortent du carter (235) et comportent une manette (238) sur le côté d'extrémité.

10. Dispositif de levage selon la revendication 6, **caractérisé en ce que** l'écrou (240) dispose d'un filetage intérieur, qui est subdivisé en alternance en zones pourvues ou dépourvues de pas de vis, dans lequel la tige filetée (215) dispose d'un filetage extérieur (239) correspondant ; et **en ce que** l'écrou (240) dispose d'une zone rétractée (243) avec un filetage extérieur (244), sur lequel un autre écrou (341) vissé sur la tige filetée (215) au moyen d'un second filetage intérieur (244) est vissé.

11. Dispositif de levage selon la revendication 6, **caractérisé en ce que** le corps d'écrou (245) comprend la tige filetée (215) dans une zone d'environ 180° ou inférieure et est en outre guidé par un trou débouchant (246) dans le tube intérieur le plus à l'intérieur (211), dans lequel un carter (247) recouvre le trou débouchant (246), dans lequel le corps d'écrou (245) est placé ; **en ce que** le corps d'écrou (245) comporte un boulon de traction (248) sur le côté détourné de la tige filetée (215), qui est conduit hors du carter (247) ; et **en ce qu'**un ressort à spirale (251) s'appuie sur le côté arrière (252) du corps d'écrou (245) et de la paroi intérieure (253) du carter (247), sachant que le boulon de traction (248) est guidé longitudinalement par le ressort à spirale.

12. Dispositif de levage selon la revendication 11, **caractérisé en ce qu'**un boulon d'arrêt (255) sous forme de bascule est articulé extérieurement sur le carter (247), dans lequel une extrémité du boulon d'arrêt (255) sert de butée pour un ressort de pression (256), qui s'appuie du reste sur le côté extérieur (254) du carter (247) et dans lequel l'autre extrémité du boulon d'arrêt (255) comporte un prolongement (258), qui serre en arrière une bague de sécurité (259) ou une manette (250), de telle sorte que le corps d'écrou (245) adhère fermement à la tige filetée (215).

13. Dispositif de levage selon la revendication 11 ou 12, **caractérisé en ce que** le boulon de traction (248) est relié au corps d'écrou de manière à pouvoir être articulé ou tourné et comporte un prolongement latéral qui se trouve par une rotation du boulon de traction (248) dans une rainure en forme de L dans la paroi intérieure (253) du carter (247) ou sur un profilé en forme de Z ou analogue en direction de la butée.

14. Dispositif de levage selon la revendication 11, 12 ou 13, **caractérisé en ce que** le boulon de traction (248) peut être arrêté dans au moins 2 positions par rapport à la tige filetée (215).
